# FASCICULE DE BREVET EUROPEEN

(11) **EP 3 906 464 B1**
(45) Date de publication et mention de la délivrance du brevet: **21.08.2024**
(21) Numéro de dépôt: 19829234.4
(22) Date de dépôt: 27.12.2019
(51) Int. Cl.: G06F 3/0354

(54) **EQUIPEMENT POUR UN PERIPHERIQUE D'ORDINATEUR**
AUSRÜSTUNG FÜR COMPUTERPERIPHERIEGERÄT
EQUIPMENT FOR A COMPUTER PERIPHERAL

(30) Priorité: 04.01.2019 FR 1900084
(43) Date de publication de la demande: 10.11.2021
(73) Titulaire: LEXIP, 73490 La Ravoire (FR)
(72) Inventeur: CHATAIGNIER, Lionel, 73490 La Ravoire (FR); CHATAIGNIER, Geoffrey, 73490 La Ravoire (FR); GIORGIS, Léo, 73490 La Ravoire (FR); LOI, Hugo, 73490 La Ravoire (FR)
(74) Mandataire: Novaimo
(86) Numéro de dépôt international: PCT/EP2019/087077
(87) Numéro de publication internationale: WO 2020/141148

(56) Documents cités:
- FR-A1- 2 921 167
- US-A1- 2007 069 088
- US-A1- 2011 001 702

## Description

L'invention concerne un équipement pour un périphérique d'ordinateur, notamment pour une souris d'ordinateur. L'invention porte aussi sur un procédé de montage d'un tel équipement. L'invention porte encore sur un périphérique d'ordinateur muni d'un tel équipement. L'invention porte encore sur un ordinateur comprenant un tel périphérique.

Les ordinateurs sont des outils utilisés quotidiennement par de nombreuses personnes pour le travail ou pour les loisirs. Les ordinateurs comprennent généralement un écran apte à afficher un pointeur et un périphérique pourvu d'une surface de glisse, notamment une souris d'ordinateur. La surface de glisse est aménagée sur au moins une partie d'une semelle de la souris et est destinée à entrer en contact avec un support plan. Le déplacement de ce périphérique sur un plan permet de faire bouger le pointeur affiché sur l'écran et ainsi d'exécuter diverses commandes. A cet effet un capteur, par exemple un capteur optique, est généralement prévu sous la semelle du périphérique de sorte à détecter les mouvements de translation du périphérique par rapport à un support. Pour une utilisation efficace d'un ordinateur, la position du pointeur doit pouvoir être contrôlée précisément et sans effort. Dans cette optique, les fabricants de périphériques, et notamment de souris d'ordinateur, prévoient généralement des patins de glisse ou coussinets sur la surface de glisse des périphériques. Ces patins peuvent être en téflon afin d'abaisser le coefficient de friction entre le périphérique et le support sur lequel il repose.

De l'état de l'art sont connus différents types de patins pour périphériques d'ordinateur, comme par exemple ceux décrits dans les documents FR 2 921 167 A1, US 2007/069088 A1, et US 2011/001702 A1.

Toutefois, l'effort nécessaire pour déplacer le périphérique reste souvent trop important ce qui engendre une fatigue de l'utilisateur lors d'utilisation prolongée du périphérique. De plus, le déplacement du pointeur est souvent saccadé car l'effort nécessaire pour déplacer le périphérique est souvent irrégulier. Notamment, lorsque le périphérique est immobile un effort plus important est nécessaire pour mettre en mouvement le périphérique. Ainsi, l'utilisateur peut éprouver des difficultés pour déplacer rapidement le pointeur vers un point précis de l'écran. Au fur et à mesure de l'utilisation du périphérique, les coussinets peuvent s'user ce qui augmente encore l'effort nécessaire pour déplacer le périphérique et/ou le rend irrégulier. Pour améliorer l'utilisation de ces périphériques, les utilisateurs ont souvent recours à un tapis spécifique, dit tapis de souris, réduisant encore le coefficient de friction avec la surface de glisse du périphérique. Toutefois ces tapis sont encombrants et offrent une surface limitée sur laquelle le périphérique doit se déplacer. Alternativement, les utilisateurs peuvent choisir d'utiliser des plans de travail comprenant une surface très lisse comme par exemple du verre. Cependant, l'utilisation de surfaces très lisses est généralement incompatible avec le système optique permettant de détecter les mouvements de translation du périphérique.

Le but de l'invention est de fournir un équipement pour un périphérique d'ordinateur et un procédé de montage d'un tel équipement remédiant aux inconvénients ci-dessus et améliorant les périphériques d'ordinateur connus de l'art antérieur.

Plus précisément, un premier objet de l'invention est un équipement permettant d'améliorer la glisse des périphériques afin d'améliorer le confort d'utilisation et de permettre une utilisation sur des surfaces irrégulières.

Un second objet de l'invention est un équipement compatible avec une grande majorité de périphériques existants.

Un troisième objet de l'invention est un équipement facile à fabriquer et à installer.

L'invention se rapporte à un équipement pour un périphérique d'ordinateur tel que défini dans la revendication 1.

Ladite portion de sphère peut avoir un rayon de courbure compris entre 8mm et 15mm inclus, notamment compris entre 10mm et 13mm inclus, voire compris entre 11 mm et 12mm inclus.

Chaque patin de l'équipement peut comprendre une deuxième surface de forme plane et circulaire, le moyen de fixation étant agencé sur la deuxième surface, le diamètre de la deuxième surface étant compris entre 20mm et 30mm inclus, notamment compris entre 25mm et 28mm inclus, voire compris entre 26mm et 27mm inclus.

Chaque patin de l'équipement peut comprendre une épaisseur strictement inférieure à 1.5mm, notamment strictement inférieure à 1.25mm. L'épaisseur de la portion cylindrique de chaque patin peut être comprise notamment entre 0.5mm et 0.7mm inclus.

Le moyen de fixation peut être une surface adhésive, notamment la surface adhésive étant protégée par un film protecteur.

L'invention se rapporte également à un procédé de montage d'un équipement tel que défini précédemment sous une semelle d'un périphérique, le procédé comprenant :
- une étape d'identification d'une zone de la semelle s'étendant selon un même plan, puis
- une étape de fixation d'un premier patin sur ladite zone, à proximité d'un premier bord extérieur de ladite zone, puis
- une étape de fixation d'un deuxième patin sur ladite zone, à proximité d'un deuxième bord extérieur de ladite zone, puis
- une étape de fixation d'un troisième patin sur ladite zone, à proximité d'un troisième bord extérieur de ladite zone, le troisième patin n'étant pas aligné dans l'axe défini par le premier patin et le deuxième patin, puis
- une étape de fixation d'un quatrième patin sur ladite zone, à proximité d'un quatrième bord extérieur de ladite zone, le quatrième patin n'étant pas aligné dans l'axe défini par le premier patin et le deuxième patin, ni dans l'axe défini par le deuxième patin et le troisième patin, ni dans l'axe défini par le premier patin et le troisième patin,
le premier patin, le deuxième patin, le troisième patin et le quatrième patin étant agencés de sorte à ce que le périphérique puisse reposer de manière stable sur un support plan via les quatre patins.

Le premier bord extérieur, le deuxième bord extérieur, le troisième bord extérieur, et le quatrième bord extérieur sont choisis parmi un bord avant gauche, un bord avant droit, un bord arrière gauche et un bord arrière droit de ladite zone.

L'étape d'identification peut comprendre:
- une détermination d'une première partie de la semelle apte à prendre appui sur un support plan,
- une détermination d'une deuxième partie de la semelle en retrait par rapport à la première partie,
ladite zone étant choisie dans la deuxième partie.

L'équipement peut comprendre une notice d'utilisation pour permettre à un utilisateur de mettre en oeuvre le procédé de montage tel que défini précédemment.

L'invention se rapporte également à un périphérique pour ordinateur comprenant :
- une semelle destinée à faire face à un support;
- au moins quatre patins issus d'un équipement tel que défini précédemment, les quatre patins étant fixés sous la semelle, et
- un capteur apte à émettre un signal dépendant d'un déplacement du périphérique parallèlement au support.

Enfin, l'invention se rapporte également à un ordinateur comprenant une unité de calcul, un écran apte à afficher un pointeur et un périphérique tel que défini précédemment, l'unité de calcul étant apte à convertir ledit signal en une commande de déplacement d'un pointeur affiché sur l'écran.

Ces objets, caractéristiques et avantages de la présente invention seront exposés en détail dans la description suivante d'un mode de réalisation particulier fait à titre non-limitatif en relation avec les figures jointes parmi lesquelles :
[Fig. 1] La figure 1 est une vue schématique d'un ordinateur selon un mode de réalisation de l'invention.
[Fig. 2] La figure 2 est une vue schématique de dessous d'un périphérique selon un mode de réalisation de l'invention.
[Fig. 3] La figure 3 est une vue de face d'un patin selon un mode de réalisation de l'invention.
[Fig. 4] La figure 4 est une vue de profil du patin.
[Fig. 5A] La figure 5A est une photographie de dessous d'un premier périphérique selon l'état de la technique.
[Fig. 5B] La figure 5B est une photographie de dessous du premier périphérique muni d'un équipement selon un mode de réalisation de l'invention.
[Fig. 6A] La figure 6A est une photographie de dessous d'un deuxième périphérique selon l'état de la technique.
[Fig. 6B] La figure 6B est une photographie de dessous du deuxième périphérique muni d'un équipement selon un mode de réalisation de l'invention.
[Fig. 7A] La figure 7A est une photographie de dessous d'un troisième périphérique selon l'état de la technique.
[Fig. 7B] La figure 7B est une photographie de dessous du troisième périphérique muni d'un équipement selon un mode de réalisation de l'invention.
[Fig. 8A] La figure 8A est une photographie de dessous d'un quatrième périphérique selon l'état de la technique.
[Fig. 8B] La figure 8B est une photographie de dessous du quatrième périphérique muni d'un équipement selon un mode de réalisation de l'invention.
[Fig. 9A] La figure 9A est une photographie de dessous d'un cinquième périphérique selon l'état de la technique.
[Fig. 9B] La figure 9B est une photographie de dessous du cinquième périphérique muni d'un équipement selon un mode de réalisation de l'invention.
[Fig. 10A] La figure 10A est une photographie de dessous d'un sixième périphérique selon l'état de la technique.
[Fig. 11B] La figure 11B est une photographie de dessous d'un septième périphérique muni d'un équipement selon un mode de réalisation de l'invention.
[Fig. 12] La figure 12 est une vue schématique de dessous d'un périphérique selon l'état de la technique.
[Fig. 13] La figure 13 est une vue schématique de profil d'un périphérique selon l'état de la technique.
[Fig. 14] La figure 14 est une vue schématique d'un équipement selon un mode de réalisation de l'invention.
[Fig. 15] La figure 15 est une vue schématique de dessous d'un périphérique selon un mode de réalisation de l'invention.
[Fig. 16] La figure 16 est une vue schématique de profil du périphérique selon un mode de réalisation de l'invention.
[Fig. 17] La figure 17 est une vue schématique de dessous d'un périphérique selon un mode de réalisation alternatif de l'invention.
[Fig. 18] La figure 18 est une vue schématique de profil du périphérique selon un mode de réalisation alternatif de l'invention.

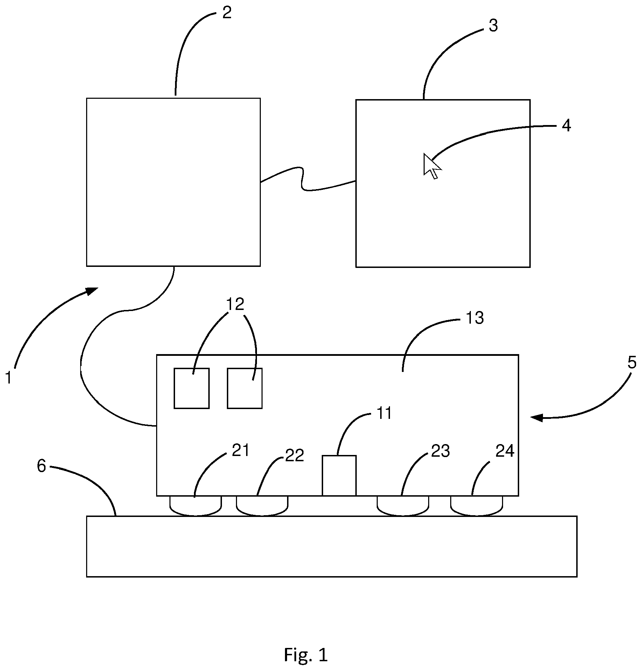

La figure 1 illustre un ordinateur 1 comprenant une unité de calcul 2, un écran 3 apte à afficher un pointeur 4 et un périphérique 5 selon un mode de réalisation de l'invention. L'ordinateur 1 peut être par exemple un ordinateur de bureau ou un ordinateur portable. L'unité de calcul 2 peut comprendre notamment au moins un microprocesseur et au moins une mémoire apte à enregistrer des instructions de code. L'écran 3 et le périphérique 5 sont reliés à l'unité de calcul 2 par exemple par une liaison filaire ou encore par une liaison sans fil.

Le périphérique 5 est un dispositif de pointage. Il comprend une semelle 10. La semelle 10 est une face du périphérique globalement plane faisant face à un support 6 sur lequel repose le périphérique 5. Le support est plan, c'est-à-dire qu'il s'étend globalement suivant un plan. Le support 6 peut être notamment un plan de travail, une table ou encore un bureau. Préférentiellement, le support 6 est sensiblement horizontal mais en variante il pourrait être incliné comme par exemple une table de dessin. Le support 6 peut se trouver en tout matériau, comme par exemple en bois, notamment en bois brut, en bois aggloméré comme du contreplaqué ou encore du bois peint ou vernis. Le support 6 peut également se trouver en plastique, en résine, en métal ou encore en verre. L'état de surface du support 6 peut être lisse ou irrégulier, voire même rugueux. Il peut comporter des rayures, des salissures ou même des trous. Lorsque le périphérique 5 repose sur le support 6, la semelle 10 est sensiblement parallèle au support 6. Selon un mode de réalisation préféré de l'invention le périphérique 5 est une souris d'ordinateur mais en variante, l'invention peut être utilisé pour tout périphérique destiné à la fois à être relié à un ordinateur et à être manipulé par un glissement sur un support.

Le périphérique 5 comprend en outre un capteur 11 apte à émettre un signal à destination de l'unité de calcul 2. Le signal dépend d'un déplacement du périphérique dans le plan défini par le support 6. L'unité de calcul est apte à convertir le signal émis par le périphérique en une commande de déplacement du pointeur 4 affiché sur l'écran 3. Ainsi, l'utilisateur du périphérique peut interagir avec l'ordinateur 1. Le capteur 11 peut être notamment un capteur optique ou un capteur laser. Le capteur 11 est donc un capteur de déplacement du périphérique. Le capteur 11 est un capteur sans contact, c'est-à-dire qu'il ne requiert pas le contact d'un organe du capteur sur le support 6. Il est agencé sur la semelle 10 de manière à coopérer avec le support 6.

Le périphérique 5 peut en outre comprendre un nombre quelconque de moyens de commande 12, tels que des boutons, une molette, voire même un joystick. Ces moyens de commandes 12 sont agencés sur un boîtier 13 surmontant la semelle 10. Avantageusement le périphérique 5 peut être manipulé avec la paume d'une main.

Le périphérique 5 comprend également quatre patins 21, 22, 23, 24 selon un mode de réalisation de l'invention. En variante le périphérique pourrait comprendre cinq ou encore davantage de patins. Préférentiellement les quatre patins 21, 22, 23, 24 sont identiques mais en variante, ils pourraient avoir des formes différentes tout en présentant une même épaisseur. Ils sont positionnés de sorte que le périphérique 5 repose sur le support 6 uniquement par l'intermédiaire des patins. Tous les patins touchent simultanément le support 6. Le périphérique 5 est donc en liaison hyperstatique avec le support 6.

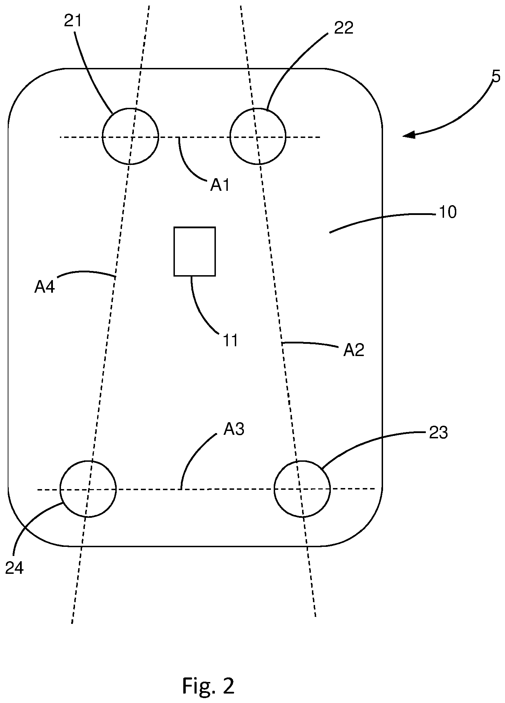

Comme représenté sur la figure 2, les patins 21, 22, 23, 24 sont fixés et répartis sous la semelle 10 du périphérique 5. On peut définir un premier axe A1 passant par le centre du premier patin 21 et par le centre du deuxième patin 22. De même on définit, un deuxième axe A2 passant par le centre du deuxième patin 22 et par le centre du troisième patin 23. De même on définit, un troisième axe A3 passant par le centre du troisième patin 23 et par le centre du quatrième patin 24. De même on définit, un quatrième axe A4 passant par le centre du quatrième patin 24 et par le centre du premier patin 21. Aucun des axes A1, A2, A3 et A4 ne sont confondus. Notamment, ces quatre axes forment un quadrilatère avec un patin agencé aux quatre coins du quadrilatère. Autrement dit, il n'existe aucun sous-ensemble de trois patins alignés entre eux. Avantageusement, les patins sont agencés de sorte à ce que le périphérique puisse reposer de manière stable sur le support 6 via les quatre patins. En particuliers, les patins ne se touchent pas entre eux. La projection du centre de gravité du périphérique 5 sur la semelle 10 se trouve à l'intérieur du quadrilatère formé par les quatre côtés A1, A2, A3, A4. Ainsi lorsqu'un utilisateur manipule le périphérique, celui-ci ne risque pas de basculer ou de se renverser.

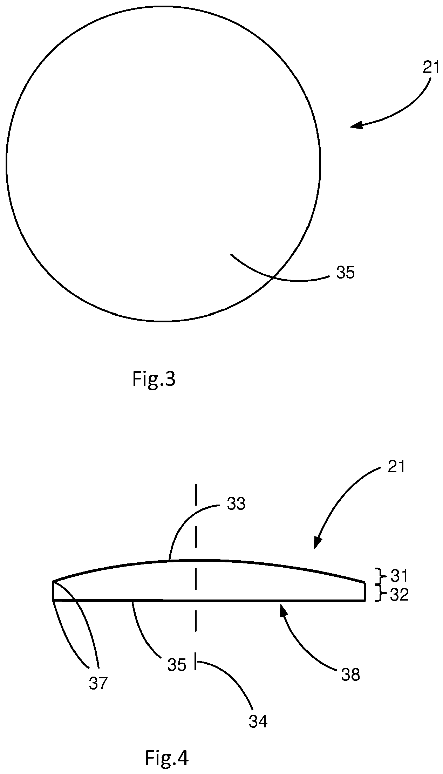

On décrit à présent un premier patin 21 en considérant les trois autres patins 22, 23, 24 identiques. La patin 21 est représenté sur les figures 3 et 4. Le patin 21 peut être décomposé en une portion de sphère 31 et une portion cylindrique 32. La portion de sphère 31 comprend une première surface 33 sphérique. La portion cylindrique 32 comprend une base et un ensemble de génératrices s'étendant parallèlement à un axe de révolution 34 du patin 21. La base a une forme circulaire et forme une deuxième surface 35 du patin 21. L'ensemble des génératrices forme une troisième surface 36 du patin 21. Des congés 37 peuvent être prévus l'interface entre la première surface 33 et la troisième surface 36, ainsi qu'à l'interface entre la deuxième surface 35 et la troisième surface 36. Ces congés peuvent avoir un rayon sensiblement égal à 0.2mm. L'axe de révolution 34 est sensiblement perpendiculaire au plan dans lequel s'étend la semelle 10. En outre, le patin 21 comprend un moyen de fixation 38, notamment un moyen adhésif, par lequel le patin est fixé sous la semelle 10 du périphérique. En variante, la portion cylindrique 32 pourrait être remplacée par une portion de forme quelconque, par exemple une portion de forme parallélépipédique.

Le patin 21 peut être monobloc et fabriqué en céramique. En variante, seule la première surface 33 pourrait être en céramique et le reste du patin pourrait être fabriqué avec un matériau moins précieux. Par exemple, le patin pourrait être fabriqué en plastique et comprendre un revêtement en céramique sur la première surface. Le matériau céramique a une dureté très élevée. Ainsi, la surface de contact du patin contre le support est très faible ce qui réduit les effets de frottements du patin contre le support. De plus, grâce à sa grande dureté les patins ne se laissent pas rayer au fil de leur utilisation ce qui permet de conserver une très bonne glisse du périphérique tout au long de son utilisation.

Ladite portion de sphère a un rayon de courbure compris entre 8mm et 15mm inclus, notamment compris entre 10mm et 13mm inclus, voire compris entre 11mm et 12mm inclus, voire même sensiblement égal à 11.25mm. Avec une telle valeur de rayon, le patin 21 peut facilement passer au-dessus des aspérités présentes à la surface du support 6, ou, autrement dit, épouser les irrégularités du support. Contrairement aux coussinets de l'état de la technique, la forme en portion de sphère prévient tout blocage ou accroche du patin contre un relief du support lors du déplacement du périphérique. Grâce à sa forme en portion de sphère le contact d'un patin sur le support est ponctuel ou quasi ponctuel ce qui permet de réduire les frottements. La forme des patins va donc à l'encontre de l'idée couramment acceptée par les fabricants de périphériques selon laquelle les coussinets formant la surface de glisse des souris doivent être larges pour homogénéiser ou régulariser l'effet de glisse.

Le diamètre de la deuxième surface est compris entre 20mm et 30mm inclus, notamment compris entre 25mm et 28mm inclus, voire compris entre 26mm et 27mm inclus, voire même sensiblement égal à 26.67mm. Ce diamètre est un compromis idéal entre d'une part un encombrement faible permettant de fixer le patin sur une surface de faible dimensions de la semelle, et d'autre part une surface adhésive entre le patin et la semelle suffisamment importante pour assurer une tenue suffisante des patins. Cette surface est également suffisamment importante pour réaliser une portion de sphère significative et ainsi de permettre au patin de passer au-dessus des aspérités du support. Ainsi, l'épaisseur de la portion de sphère (autrement dit sa hauteur suivant l'axe perpendiculaire au plan de la semelle) peut être comprise entre 0.4mm et 0.8mm, notamment entre 0.5mm et 0.7mm, voire même sensiblement égale à 0.6mm.

Le patin 21 comprend une épaisseur totale, autrement dit une hauteur totale, strictement inférieure à 1.5mm, notamment strictement inférieure à 1.25mm, et notamment environ égale à 1.2mm selon le mode de réalisation illustré sur la figure 4. Cette hauteur est particulièrement faible et permet d'obtenir un surélèvement minimal du périphérique 5 après fixation des patins 5. Le surélèvement du périphérique 5 est toutefois suffisant pour lui permettre de ne pas buter contre des aspérités du support 6. Ainsi, le fonctionnement du capteur 11 n'est pas perturbé et la position du pointeur 4 affiché sur l'écran peut être contrôlée avec précision. De même, la prise en main du périphérique est insensiblement modifiée. L'épaisseur, autrement dit la hauteur, de la portion cylindrique peut être comprise entre 0.4mm et 0.8mm inclus, notamment entre 0.5mm et 0.7mm inclus, notamment être égale à environ 0.6mm. En variante, l'épaisseur de la portion cylindrique pourrait être encore plus faible. La présence d'une portion cylindrique dans le patin 21 permet de simplifier sa fabrication. En effet, la présence de la portion cylindrique permet d'éviter d'avoir un patin présentant une arrête vive. Un telle arrête vive serait particulièrement cassante. La rupture du bord du patin pourrait réduire la surface de contact du patin sur la semelle et le rendre moins adhérent. De plus, une telle rupture pourrait être non esthétique et/ou donner une impression de qualité perçue dégradée. De plus, la portion cylindrique permet de rehausser la semelle 10 par rapport au support ce qui améliore la capacité de la souris à glisser sur des surfaces inégales ou présentant des particules qui pourraient autrement se bloquer entre le support 6 et la semelle 10. La présence d'une portion cylindrique permet de choisir librement le rayon de la surface sphérique sans devoir modifier le surélèvement de la semelle du périphérique par rapport à la surface sur laquelle le périphérique repose et/ou sans avoir à modifier la surface de contact entre le patin et la semelle.

On décrit à présent le procédé de fabrication du périphérique 5.

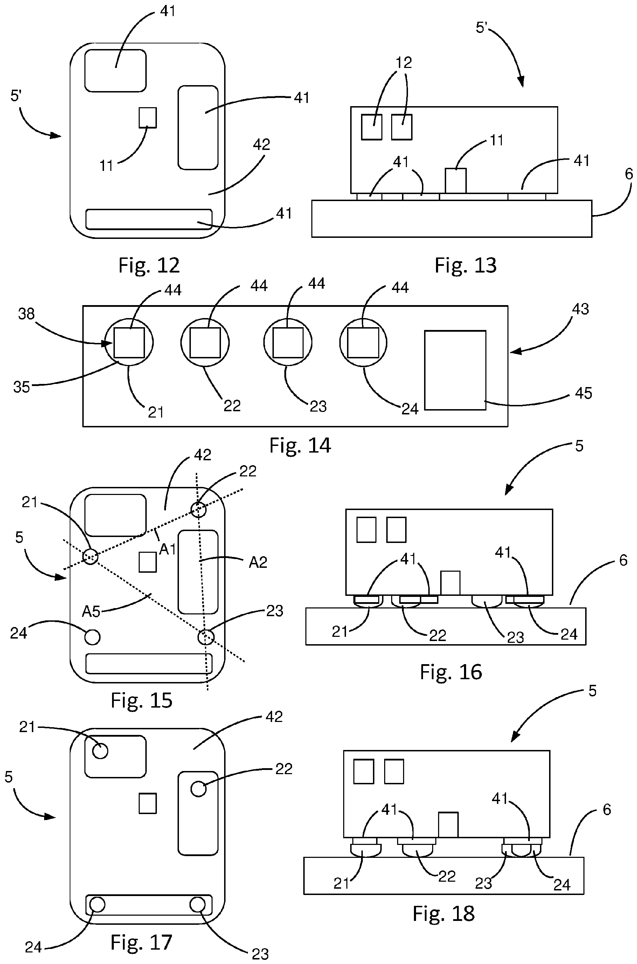

Dans une première étape, on fournit un périphérique 5' quelconque et dépourvu des patins 21, 22, 23, 24. Le périphérique 5' peut être un périphérique neuf ou un périphérique déjà utilisé. Le périphérique 5' peut notamment être une souris d'ordinateur de l'état de la technique. Dans le cas où le périphérique 5' a déjà été utilisé, sa semelle pourra être préalablement nettoyée. Un tel périphérique 5' est notamment illustré sur les figures 12 et 13. La semelle comprend une surface de glisse, c'est-à-dire une partie de la semelle par laquelle le périphérique 5' était jusqu'alors en contact avec un support. La surface de glisse forme une première partie 41 de la semelle. Cette surface de glisse peut être par exemple réalisée avec des coussinets en téflon qui sont des sortes de patin dont la surface est plane. La surface de glisse peut être constituée de plusieurs zones distinctes (c'est-à-dire non contigües) réparties sur la semelle. En dehors de la surface de glisse, la semelle comprend une zone en retrait par rapport à la surface de glisse. Cette zone n'est donc pas en contact avec le support 6 et forme une deuxième partie 42 de la semelle, complémentaire de la première partie 41. Cette deuxième partie peut comprendre une zone plane sensiblement parallèle à la surface de glisse et en retrait par rapport à la surface de glisse. La semelle peut comprendre en outre des reliefs ou des marquages ou encore le capteur 11. Ces éléments peuvent former des irrégularités à la surface de la semelle mais qui restent néanmoins en retrait par rapport à la surface de glisse.

Dans une deuxième étape, on fournit un équipement 43 comprenant les quatre patins 21, 22, 23, 24. Un tel équipement est notamment illustré sur la figure 14 et peut se trouver sous la forme d'une boîte, ou d'un kit comprenant les patins 21, 22, 23, 24. La boîte peut comprendre un plus grand nombre de patins destinés à être fixés sous la semelle d'un même périphérique. Le nombre de patins peut même être suffisant pour équiper plusieurs périphériques sachant qu'il faut au moins quatre patins pour équiper un périphérique. Chaque patin comprend sur sa deuxième face un moyen de fixation 38, en l'espèce un moyen adhésif, permettant de fixer chaque patin sous la semelle du périphérique. Avantageusement, le moyen adhésif peut être recouvert par un film de protection 44 en attendant d'être utilisé. Le moyen adhésif peut recouvrir la totalité de la deuxième surface 35 ou en variante, uniquement une partie de la deuxième surface. En variante, le moyen adhésif pourrait se présenter sous la forme d'un scotch à double face et l'utilisateur serait alors chargé de coller lui-même une première face du scotch sur la deuxième surface. Selon une autre variante, le moyen adhésif pourrait être remplacé par une réserve de colle que l'utilisateur serait chargé d'appliquer sur la deuxième surface.

Dans une troisième étape on identifie sur la semelle du périphérique une zone s'étendant selon un même plan sur laquelle les quatre patins vont pouvoir être fixés. Cette zone peut être la première partie 41 ou la deuxième partie 42 de la semelle. Cette zone ne comprend pas le capteur 11 afin de ne pas le masquer avec un patin. Lorsque les patins sont fixés dans la deuxième partie de la semelle, c'est-à-dire une partie de la semelle qui ne forme pas la surface de glisse et qui est donc en retrait par rapport à la surface de glisse, le surélèvement du périphérique obtenu est ainsi avantageusement inférieur à l'épaisseur des patins 21, 22, 23, 24. Le bon fonctionnement du capteur 11 et/ou la prise en main du périphérique en est d'autant moins affecté.

Dans une quatrième étape, on fixe successivement les quatre patins sur la zone préalablement identifiée. Les figures 15 et 16 illustrent le périphérique 5 sur lequel les patins sont fixés dans la deuxième zone 42. Les figures 17 et 18 illustrent le périphérique 5 sur lequel les patins sont fixés dans la première zone 41. Chaque patin est fixé à proximité d'un bord extérieur de la zone considérée. Notamment, le premier patin 21 est fixé à proximité d'un bord avant gauche de la zone considérée. Le deuxième patin 22 est fixé à proximité d'un bord avant droit de la zone considérée. Le troisième patin 23 est fixé à proximité d'un bord arrière droit de la zone considérée. Le quatrième patin 24 est fixé à proximité d'un bord arrière gauche de la zone considérée. Ainsi, le quadrilatère formé par les quatre patins a une surface importante comparativement à la surface de la de la semelle 10 et le périphérique demeure stable.

Le troisième patin 23 n'est pas aligné dans l'axe défini par le premier patin et le deuxième patin. Le quatrième patin n'est pas aligné dans l'axe A1 défini par le premier patin et le deuxième patin, ni dans l'axe A2 défini par le deuxième patin et le troisième patin, ni dans l'axe A5 défini par le premier patin et le troisième patin. Ainsi, les quatre patins sont positionnés aux quatre coins d'un quadrilatère défini par les axes A1, A2, A3 et A4 et le périphérique peut reposer de manière stable sur un support plan via les quatre patins.

Une notice d'utilisation 45 ou un manuel détaillant le mode opératoire à suivre pour fixer les patins 21, 22, 23, 24 pourra être jointe à l'équipement 43 de manière à ce que l'utilisateur procède lui-même au montage des patins.

En remarque, la présence d'au moins quatre patins sur la semelle défini une position hyperstatique du périphérique. Toutefois comme, les patins sont fixés sur un même plan de la semelle et comprennent une même hauteur, ils sont simultanément en appui sur le support et le périphérique n'est pas bancal. Dans l'hypothèse où de faibles variations de hauteur entre les patins se produirait (par exemple en raison d'un défaut de planéité de la surface sur laquelle les patins sont fixés ou en raison des tolérances de fabrication des patins), l'appui simultané des quatre patins pourrait néanmoins être obtenu grâce à une déformation de la semelle du périphérique sous son propre poids et sous le poids de la main de l'utilisateur.

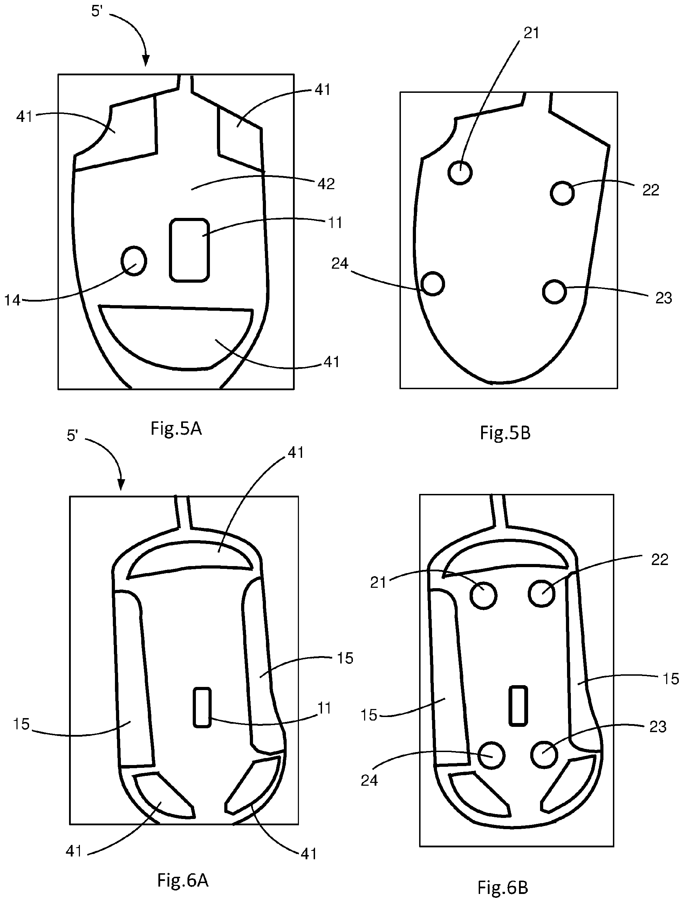

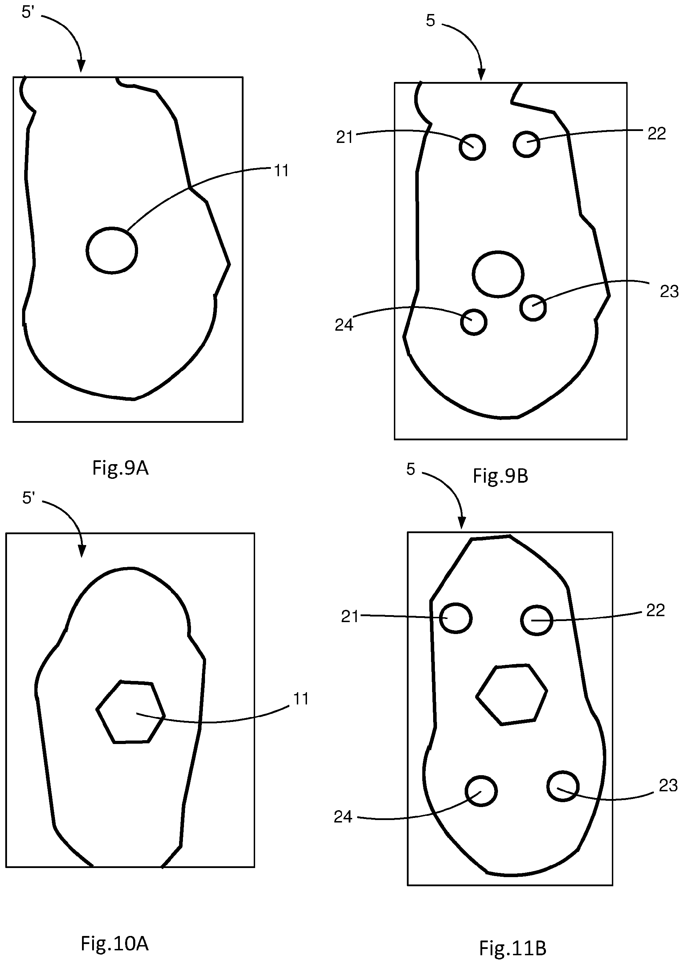

Les figures 5A, 6A, 7A, 8A, 9A et 10A sont des photographies de périphériques 5' avant le montage des patins 21, 22, 23, 24. Les figures 5B, 6B, 7B, 8B, 9B et 11B sont des photographies de ces mêmes périphériques après le montage des patins.

Comme on peut l'observer sur la figure 5A, la semelle comprend trois coussinets définissant une surface de glisse et formant la première partie 41 de la semelle. La semelle comprend également un capteur 11 et différents accessoires en relief comme par exemple un commutateur 14 de marche/arrêt de la souris. En dehors de la première partie 41 et du capteur 11 et des accessoires en relief, la semelle s'étend selon un plan sur lequel figure des inscriptions. Ce plan forme la deuxième partie de la semelle sur laquelle sont fixés les quatre patins 21, 22, 23, 24 conformément à la figure 5B

Sur la figure 6A, on observe que la semelle comprend outre les trois coussinets, deux évidements 15 latéraux. Comme illustré sur la figure 6B, on prend soin de ne pas fixer les patins dans ces évidements pour garantir un appui stable de la souris sur le support.

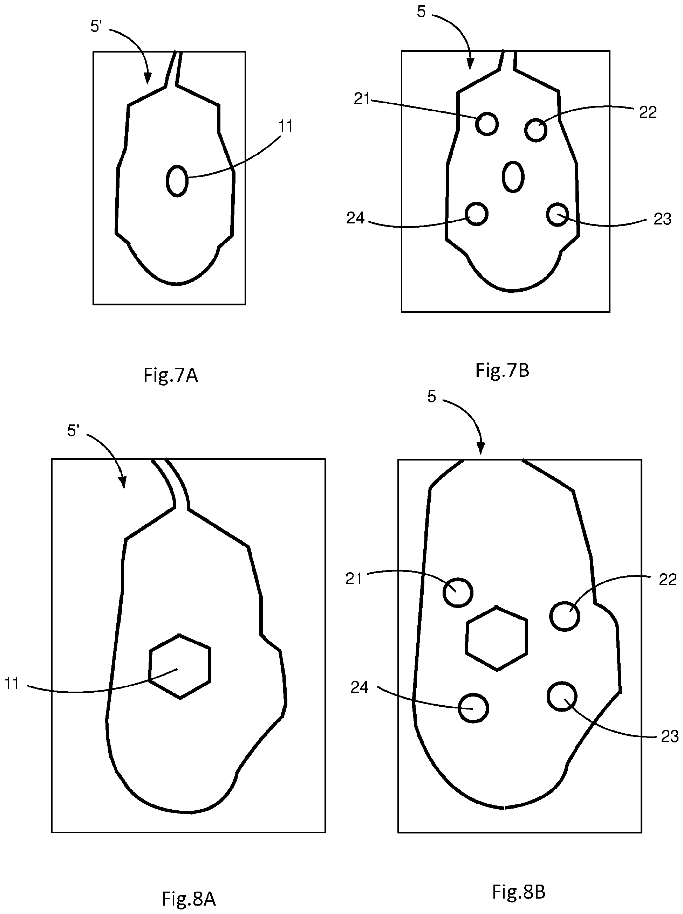

Sur la figure 8A, on observe que la semelle comprend une forme complexe avec de nombreux reliefs. Grâce aux dimensions relativement restreintes des patins, et notamment de la deuxième surface des patins, on parvient néanmoins à trouver une zone de la semelle sur laquelle fixer les patins. En remarque, la totalité de la deuxième surface ne doit pas nécessairement être collée à la semelle : une partie de la deuxième surface de chaque patin peut se trouver en vis-à-vis d'une zone en retrait de la semelle et donc ne pas participer à l'adhérence du patin sur la semelle. Avantageusement, le moyen adhésif est choisi de sorte à produire une tenue suffisante du patin même si uniquement une partie de du moyen adhésif est en contact avec la semelle.

Finalement quel que soit le périphérique considéré, on parvient à identifier une zone de la semelle s'étendant selon un même plan et sur laquelle on peut fixer les quatre patins tout en conservant une bonne stabilité du périphérique.

Selon une autre variante d'agencement, il est possible de fixer deux patins sur un premier plan de la semelle, par exemple les patins 21 et 22, et de fixer les deux autres patins 23, 24 sur un deuxième plan de la semelle en retrait par rapport au premier plan. Dans ce cas, l'utilisateur veillera à ce que l'axe A1 définit entre le premier patin 21 et le deuxième patin 22 soit bien parallèle à l'axe A3 défini entre le troisième patin et le quatrième patin. On parviendra ainsi à maintenir un appui du périphérique simultanément avec les quatre patins. La semelle du périphérique pourra ainsi se retrouver très légèrement incliné par rapport au support ce qui ne gênera pas son utilisation.

Selon un autre aspect de l'invention, une base de données comprenant une liste de périphériques disponibles sur le marché pourra être mise à disposition de l'utilisateur. Pour chaque périphérique, la base de données pourrait confirmer la possibilité de fixer les patins sur une zone de la semelle et préciser les emplacements où disposer ces patins. Cette base de données pourrait par exemple être accessible depuis l'Internet.

Grâce à l'invention on dispose d'un équipement compatible avec une grande majorité de périphériques existants et facile à installer soi-même. L'équipement permet d'améliorer la glisse des périphériques sans requérir le remplacement complet du périphérique. Il permet d'utiliser le périphérique sur des surfaces irrégulières qui produisaient, avec des coussinets selon l'état de la technique, un inconfort d'utilisation.

## Revendications

1. Equipement (43) pour un périphérique (5) d'ordinateur (1), le périphérique (5) comprenant une semelle (10) et étant destiné à glisser sur un support (6), la semelle (10) étant destinée à faire face au support (6), notamment le périphérique (5) étant une souris d'ordinateur, l'équipement comprenant un ensemble d'au moins quatre patins (21, 22, 23, 24), chaque patin (21, 22, 23, 24) de l'équipement (5) comprenant une première surface (33) en céramique en forme d'une portion de sphère (31), et un moyen de fixation (38) pour fixer le patin (21, 22, 23, 24) sous la semelle (10) du périphérique (5), **caractérisé en ce que** chaque patin (21, 22, 23, 24) de l'équipement (5) comprend une portion cylindrique (32), la portion cylindrique (32) étant destinée à être fixée contre la semelle (10) du périphérique (5), l'épaisseur de la portion cylindrique (32) de chaque patin (21, 22, 23, 24) étant comprise entre 0.4mm et 0.8mm inclus, chaque patin étant monobloc et fabriqué en céramique ou chaque patin étant fabriqué en plastique et comprenant un revêtement en céramique sur la première surface.

2. Equipement (43) selon la revendication précédente, **caractérisé en ce que** ladite portion de sphère (31) a un rayon de courbure compris entre 8mm et 15mm inclus, notamment compris entre 10mm et 13mm inclus, voire compris entre 11mm et 12mm inclus.

3. Equipement (43) selon l'une des revendications précédentes, **caractérisé en ce que** chaque patin (21, 22, 23, 24) de l'équipement (43) comprend une deuxième surface (35) de forme plane et circulaire, le moyen de fixation (38) étant agencé sur la deuxième surface (35), le diamètre de la deuxième surface (35) étant compris entre 20mm et 30mm inclus, notamment compris entre 25mm et 28mm inclus, voire compris entre 26mm et 27mm inclus.

4. Equipement (43) selon l'une des revendications précédentes, **caractérisé en ce que** chaque patin (21, 22, 23, 24) de l'équipement (43) comprend une épaisseur strictement inférieure à 1.5mm, notamment strictement inférieure à 1.25mm.

5. Equipement (43) selon l'une des revendications précédentes, **caractérisé en ce que** l'épaisseur de la portion cylindrique (32) de chaque patin (21, 22, 23, 24)est comprise entre 0.5mm et 0.7mm inclus.

6. Equipement (43) selon l'une des revendications précédentes, **caractérisé en ce que** le moyen de fixation (38) est une surface adhésive, notamment la surface adhésive étant protégée par un film protecteur (44).

7. Procédé de montage d'un équipement (43) selon l'une des revendications précédentes sous une semelle (10) d'un périphérique (5), **caractérisé en ce qu'**il comprend :
- une étape d'identification d'une zone (41, 42) de la semelle s'étendant selon un même plan, puis
- une étape de fixation d'un premier patin (21) sur ladite zone, à proximité d'un premier bord extérieur de ladite zone, puis
- une étape de fixation d'un deuxième patin (22) sur ladite zone, à proximité d'un deuxième bord extérieur de ladite zone, puis
- une étape de fixation d'un troisième patin (23) sur ladite zone, à proximité d'un troisième bord extérieur de ladite zone, le troisième patin (23) n'étant pas aligné dans l'axe (A1) défini par le premier patin (21) et le deuxième patin (22), puis
- une étape de fixation d'un quatrième patin (24) sur ladite zone, à proximité d'un quatrième bord extérieur de ladite zone, le quatrième patin (24) n'étant pas aligné dans l'axe (A1) défini par le premier patin (21) et le deuxième patin (22), ni dans l'axe (A2) défini par le deuxième patin (22) et le troisième patin (23), ni dans l'axe (A5) défini par le premier patin (21) et le troisième patin (23),
le premier patin (21), le deuxième patin (22), le troisième patin (23) et le quatrième patin (24) étant agencés de sorte à ce que le périphérique (5) puisse reposer de manière stable sur un support (6) plan via les quatre patins (21, 22, 23, 24).

8. Procédé de montage selon la revendication précédente, **caractérisé en ce que** le premier bord extérieur, le deuxième bord extérieur, le troisième bord extérieur, et le quatrième bord extérieur sont choisis parmi un bord avant gauche, un bord avant droit, un bord arrière gauche et un bord arrière droit de ladite zone.

9. Procédé de montage selon l'une des revendications 7 ou 8, **caractérisé en ce que** l'étape d'identification comprend :
- une détermination d'une première partie (41) de la semelle apte à prendre appui sur un support plan,
- une détermination d'une deuxième partie (42) de la semelle en retrait par rapport à la première partie (41),
ladite zone étant choisie dans la deuxième partie (42).

10. Equipement (43) selon l'une des revendications 1 à 6 **caractérisé en ce qu'**il comprend une notice d'utilisation (45) pour permettre à un utilisateur de mettre en oeuvre le procédé de montage selon l'une des revendications 7 à 9.

11. Périphérique (5) pour ordinateur (1), **caractérisé en ce qu'**il comprend:
- une semelle (10) destinée à faire face à un support (6);
- au moins quatre patins (21, 22, 23, 24) issus d'un équipement (43) selon l'une des revendications 1 à 6 ou selon la revendication 10, les quatre patins (21, 22, 23, 24) étant fixés sous la semelle (10), et
- un capteur (11) apte à émettre un signal dépendant d'un déplacement du périphérique parallèlement au support (6).

12. Ordinateur (1), **caractérisé en ce qu'**il comprend une unité de calcul (2), un écran (3) apte à afficher un pointeur (4) et un périphérique (5) selon la revendication précédente, l'unité de calcul (2) étant apte à convertir ledit signal en une commande de déplacement d'un pointeur (4) affiché sur l'écran (3).

## Patentansprüche

1. Ausrüstung (43) für ein Peripheriegerät (5) eines Computers (1), wobei das Peripheriegerät (5) eine Sohle (10) umfasst und dazu bestimmt ist, auf einer Unterlage (6) zu gleiten, wobei die Sohle (10) dazu bestimmt ist, der Unterlage (6) gegenüberzuliegen, wobei insbesondere das Peripheriegerät (5) eine Computermaus ist, wobei die Ausrüstung eine Anordnung von wenigstens vier Kufen (21, 22, 23, 24) umfasst, wobei jede Kufe (21, 22, 23, 24) der Ausrüstung (5) eine erste Fläche (33) aus Keramik in Form eines Kugelabschnitts (31) und ein Befestigungsmittel (38) zur Befestigung der Kufe (21, 22, 23, 24) unter der Sohle (10) des Peripheriegeräts (5) umfasst,**dadurch gekennzeichnet, dass** jede Kufe (21, 22, 23, 24) der Ausrüstung (5) einen zylindrischen Abschnitt (32) umfasst, wobei der zylindrische Abschnitt (32) dazu bestimmt ist, an der Sohle (10) des Peripheriegeräts (5) befestigt zu sein, wobei die Dicke des zylindrischen Abschnitts (32) jeder Kufe (21, 22, 23, 24) zwischen 0,4 mm und einschließlich 0,8 mm beträgt, wobei jede Kufe einstückig ist und aus Keramik hergestellt ist oder jede Kufe aus Kunststoff hergestellt ist und eine Beschichtung aus Keramik auf der ersten Fläche umfasst.

2. Ausrüstung (43) nach dem vorhergehenden Anspruch, **dadurch gekennzeichnet, dass** der Kugelabschnitt (31) einen Krümmungsradius zwischen 8 mm und einschließlich 15 mm, insbesondere zwischen 10 mm und einschließlich 13 mm, ja sogar zwischen 11 mm und einschließlich 12 mm aufweist.

3. Ausrüstung (43) nach einem der vorhergehenden Ansprüche, **dadurch gekennzeichnet, dass** jede Kufe (21, 22, 23, 24) der Ausrüstung (43) eine zweite Fläche (35) mit ebener und kreisförmiger Form umfasst, wobei das Befestigungsmittel (38) auf der zweiten Fläche (35) angeordnet ist, wobei der Durchmesser der zweiten Fläche (35) zwischen 20 mm und einschließlich 30 mm, insbesondere zwischen 25 mm und einschließlich 28 mm, ja sogar zwischen 26 mm und einschließlich 27 mm beträgt.

4. Ausrüstung (43) nach einem der vorhergehenden Ansprüche, **dadurch gekennzeichnet, dass** jede Kufe (21, 22, 23, 24) der Ausrüstung (43) eine Dicke umfasst, die streng kleiner als 1,5 mm, insbesondere streng kleiner als 1,25 mm ist.

5. Ausrüstung (43) nach einem der vorhergehenden Ansprüche, **dadurch gekennzeichnet, dass** die Dicke des zylindrischen Abschnitts (32) jeder Kufe (21, 22, 23, 24) zwischen 0,5 mm und einschließlich 0,7 mm beträgt.

6. Ausrüstung (43) nach einem der vorhergehenden Ansprüche, **dadurch gekennzeichnet, dass** das Befestigungsmittel (38) eine Klebefläche ist, insbesondere eine Klebefläche, die von einer Schutzfolie (44) geschützt ist.

7. Verfahren zur Montage einer Ausrüstung (43) nach einem der vorhergehenden Ansprüche unter einer Sohle (10) eines Peripheriegeräts (5), **dadurch gekennzeichnet, dass** es Folgendes umfasst:
- einen Schritt des Ermittelns eines Bereichs (41, 42) der Sohle, der sich auf ein und derselben Ebene erstreckt, dann
- einen Schritt des Befestigens einer ersten Kufe (21) auf dem Bereich in der Nähe eines ersten Außenrands des Bereichs, dann
- einen Schritt des Befestigens einer zweiten Kufe (22) auf dem Bereich in der Nähe eines zweiten Außenrands des Bereichs, dann
- einen Schritt des Befestigens einer dritten Kufe (23) auf dem Bereich in der Nähe eines dritten Außenrands des Bereichs, wobei sich die dritte Kufe (23) nicht in einer Linie mit der Achse (A1) befindet, die von der ersten Kufe (21) und der zweiten Kufe (22) definiert wird, dann
- einen Schritt des Befestigens einer vierten Kufe (24) auf dem Bereich in der Nähe eines vierten Außenrands des Bereichs, wobei sich die vierte Kufe (24) weder mit der Achse (A1), die von der ersten Kufe (21) und der zweiten Kufe (22) definiert wird, noch mit der Achse (A2), die von der zweiten Kufe (22) und der dritten Kufe (23) definiert wird, noch mit der Achse (A5), die von der ersten Kufe (21) und der dritten Kufe (23) definiert wird, in einer Linie befindet,
wobei die erste Kufe (21), die zweite Kufe (22), die dritte Kufe (23) und die vierte Kufe (24) so angeordnet sind, dass das Peripheriegerät (5) über die vier Kufen (21, 22, 23, 24) stabil auf einer ebenen Unterlage (6) aufliegen kann.

8. Montageverfahren nach dem vorhergehenden Anspruch, **dadurch gekennzeichnet, dass** der erste Außenrand, der zweite Außenrand, der dritte Außenrand und der vierte Außenrand aus einem vorderen linken Rand, einem vorderen rechten Rand, einem hinteren linken Rand und einem hinteren rechten Rand des Bereichs gewählt sind.

9. Montageverfahren nach einem der Ansprüche 7 oder 8, **dadurch gekennzeichnet, dass** der Schritt des Ermittelns Folgendes umfasst:
- ein Bestimmen eines ersten Abschnitts (41) der Sohle, der geeignet ist, an einer ebenen Unterlage anzuliegen,
- ein Bestimmen eines zweiten Abschnitts (42) der Sohle, der im Verhältnis zum ersten Abschnitt (41) zurückgesetzt ist,
wobei der Bereich aus dem zweiten Abschnitt (42) gewählt ist.

10. Ausrüstung (43) nach einem der Ansprüche 1 bis 6, **dadurch gekennzeichnet, dass** sie eine Bedienungsanleitung (45) umfasst, um es einem Benutzer zu ermöglichen, das Montageverfahren nach einem der Ansprüche 7 bis 9 durchzuführen.

11. Peripheriegerät (5) für einen Computer (1), **dadurch gekennzeichnet, dass** es Folgendes umfasst:
- eine Sohle (10), die dazu bestimmt ist, einer Unterlage (6) gegenüberzuliegen;
- wenigstens vier Kufen (21, 22, 23, 24) aus einer Ausrüstung (43) nach einem der Ansprüche 1 bis 6 oder Anspruch 10, wobei die vier Kufen (21, 22, 23, 24) unter der Sohle (10) befestigt sind, und
- einen Sensor (11), der geeignet ist, ein Signal auszusenden, das von einer Bewegung des Peripheriegeräts parallel zur Unterlage (6) abhängig ist.

12. Computer (1), **dadurch gekennzeichnet, dass** er eine Recheneinheit (2), einen Bildschirm (3), der geeignet ist, einen Cursor (4) anzuzeigen, und ein Peripheriegerät (5) nach dem vorhergehenden Anspruch umfasst, wobei die Recheneinheit (2) geeignet ist, das Signal in einen Befehl zur Bewegung eines Cursors (4), der auf dem Bildschirm (3) angezeigt wird, umzuwandeln.

## Claims

1. An equipment item (43) for a computer (1) peripheral (5), the peripheral (5) comprising a base (10) and being intended to slide on a support (6), the base (10) being intended to face the support (6), in particular the peripheral (5) being a computer mouse, the equipment item (43) comprising a set of at least four runners (21, 22, 23, 24), each runner (21, 22, 23, 24) of the equipment item (5) comprising a first ceramic surface (33) in the form of a portion of a sphere (31), and a fastening means (38) for fastening the runner (21, 22, 23, 24) below the base (10) of the peripheral (5), **characterized in that** each runner (21, 22, 23, 24) of the equipment item (5) comprises a cylindrical portion (32), the cylindrical portion (32) being intended to be fastened against the base (10) of a peripheral (5), the thickness of the cylindrical portion (32) of each runner (21, 22, 23, 24) being between 0.4 mm and 0.8 mm inclusive, each runner being in one piece and manufactured from ceramic or each runner being manufactured from plastic and comprising a ceramic coating on the first surface.

2. The equipment item (43) as claimed in the preceding claim, **characterized in that** said portion of a sphere (31) has a radius of curvature of between 8 mm and 15 mm inclusive, in particular between 10 mm and 13 mm inclusive, or even between 11 mm and 12 mm inclusive.

3. The equipment item (43) as claimed in one of the preceding claims, **characterized in that** each runner (21, 22, 23, 24) of the equipment item (43) comprises a second surface (35) of flat and circular shape, the fastening means (38) being arranged on the second surface (35), the diameter of the second surface (35) being between 20 mm and 30 mm inclusive, in particular between 25 mm and 28 mm inclusive, or even between 26 mm and 27 mm inclusive.

4. The equipment item (43) as claimed in one of the preceding claims, **characterized in that** each runner (21, 22, 23, 24) of the equipment item (43) comprises a thickness strictly less than 1.5 mm, in particular strictly less than 1.25 mm.

5. The equipment item (43) as claimed in one of the preceding claims, **characterized in that** the thickness of the cylindrical portion (32) of each runner (21, 22, 23, 24) is between 0.5 mm and 0.7 mm inclusive.

6. The equipment item (43) as claimed in one of the preceding claims, **characterized in that** the fastening means (38) is an adhesive surface, in particular the adhesive surface being protected by a protective film (44).

7. A method for mounting an equipment item (43) as claimed in one of the preceding claims below a base (10) of a peripheral (5), **characterized in that** it comprises:
- a step of identifying a region (41, 42) of the base extending in one and the same plane, and then
- a step of fastening a first runner (21) to said region, in the vicinity of a first outer edge of said region, and then
- a step of fastening a second runner (22) to said region, in the vicinity of a second outer edge of said region, and then
- a step of fastening a third runner (23) to said region, in the vicinity of a third outer edge of said region, the third runner (23) not being aligned in the axis (A1) defined by the first runner (21) and the second runner (22), and then
- a step of fastening a fourth runner (24) to said region, in the vicinity of a fourth outer edge of said region, the fourth runner (24) not being aligned in the axis (A1) defined by the first runner (21) and the second runner (22), nor in the axis (A2) defined by the second runner (22) and the third runner (23), nor in the axis (A5) defined by the first runner (21) and the third runner (23),
the first runner (21), the second runner (22), the third runner (23) and the fourth runner (24) being arranged in such a way that the peripheral (5) can rest in a stable manner on a flat support (6) via the four runners (21, 22, 23, 24).

8. The mounting method as claimed in the preceding claim, **characterized in that** the first outer edge, the second outer edge, the third outer edge and the fourth outer edge are chosen from among a left front edge, a right front edge, a left rear edge and a right rear edge of said region.

9. The mounting method as claimed in one of claims 7 and 8, **characterized in that** the identification step comprises:
- determining a first part (41) of the base able to bear on a flat support,
- determining a second part (42) of the base set back with respect to the first part (41),
said region being chosen in the second part (42).

10. The equipment item (43) as claimed in one of claims 1 to 6, **characterized in that** it comprises a use notice (45) to allow a user to implement the mounting method as claimed in one of claims 7 to 9.

11. A peripheral (5) for a computer (1), **characterized in that** it comprises:
- a base (10) intended to face a support (6);
- at least four runners (21, 22, 23, 24) emanating from an equipment item (43) as claimed in one of claims 1 to 6 or as claimed in claim 10, the four runners (21, 22, 23, 24) being fastened below the base (10), and
- a sensor (11) able to emit a signal dependent on a movement of the peripheral parallel to the support (6).

12. A computer (1), **characterized in that** it comprises a computing unit (2), a screen (3) able to display a pointer (4), and a peripheral (5) as claimed in the preceding claim, the computing unit (2) being able to convert said signal into a command for moving a pointer (4) displayed on the screen (3).
